(19)

**Europäisches Patentamt**
**European Patent Office**
**Office européen des brevets**

(11) **EP 1 780 850 A1**

(12) **EUROPEAN PATENT APPLICATION**

(43) Date of publication:
**02.05.2007 Bulletin 2007/18**

(51) Int Cl.:
*H02G 3/06* (2006.01)

(21) Application number: **05425766.2**

(22) Date of filing: **31.10.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Bertoldo & C. Srl**
**10078 Venaria Reale (Torino) (IT)**

(72) Inventor: **Bertoldo, Piero,**
**c/o Bertoldo & C. Srl**
**10078 Venaria Reale (Torino) (IT)**

(74) Representative: **Marchitelli, Mauro**
**c/o Buzzi, Notaro & Antonielli d'Oulx Srl**
**Via Maria Vittoria 18**
**10123 Torino (IT)**

(54) **Joint for conduits for electric wirings**

(57)    Joint for conduits for electric wirings, comprising a tubular body having an inner surface (18) able to receive the end portion of at least one conduit (12). The joint has a plurality of ribs (20) projecting radially towards the interior from the inner surface (18) of the tubular body. The inner ends of the ribs (20) are tangential to a cylindrical surface with a smaller diameter ($D_i$) than the minimum diameter ($D_{min}$) of the pipe (12) which can be coupled to the joint (10).

## FIG. 2

**EP 1 780 850 A1**

**Description**

The present invention relates to a joint for conduits for electric wirings, in particular for connecting smooth conduits.

Known joints for smooth conduits are essentially formed by a tubular body with an inner surface so dimensioned as to receive with interference the end portions of two conduits to be joined. The problem of joints of this kind is represented by the fabrication tolerances of the conduits. A conduit with nominal diameter $D_n$ and with a tolerance t will be available commercially with an actual diameter varying from a minimum diameter $D_{min}=D_n-t$ to a maximum diameter $D_{max}=D_n+t$. The variation of the actual diameter of the conduit with respect to the nominal diameter causes problems with fastening the conduit and the joint. In some cases, the coupling between the conduit and the joint can be difficult while in other cases the conduit has excessive play with respect to the inner surface of the joint.

To solve this problem, joints for smooth conduits having a conical inner surface have already been proposed. The conical shape of the inner surface of the joint overcomes the problem described above. However, with joints having conical surface the coupling between conduit and joint takes place with a penetration of the conduit inside the joint that is variable according to the actual diameter of the conduit. Conduits with greater diameter penetrate inside the joint by a less quantity than conduits with smaller diameter. The consequence of this is that in the junction area between the two conduits, within the joint are formed two front steps, which can hamper the passage of the cable pulling probes and of the electrical wires. A further problem is that it can be very difficult to uncouple the conduit from the joint if the conduit is planted forcibly into the conical surface of the joint.

The object of the present invention is to provide a joint for conduits for electric wirings which overcomes all the problems of known joints. A further object of the invention is to provide a joint that is able to provide a degree of protection in accordance with the IP40 standard.

According to the present invention, said objects are achieved by a joint having the characteristics set out in the claims.

The present invention shall now be described in detail with reference to the accompanying drawings, provided purely by way of non limiting example, in which:

- Figure 1 is an exploded perspective view showing a joint according to the present invention, together with the ends of two smooth conduits,
- Figure 2 is a cross section in enlarged scale showing the joint according to the invention in undeformed condition,
- Figure 3 is a cross section similar to Figure 2 showing the joint according to the invention in a deformed condition as a result of coupling with a conduit with maximum diameter,
- Figures 4, 6, 8 are perspective views of junction devices for conduits using joints according to the present invention, and
- Figures 5, 7, 9 are sections according to the lines V-V, VII-VII, IX-IX of Figures 4, 6, 8.

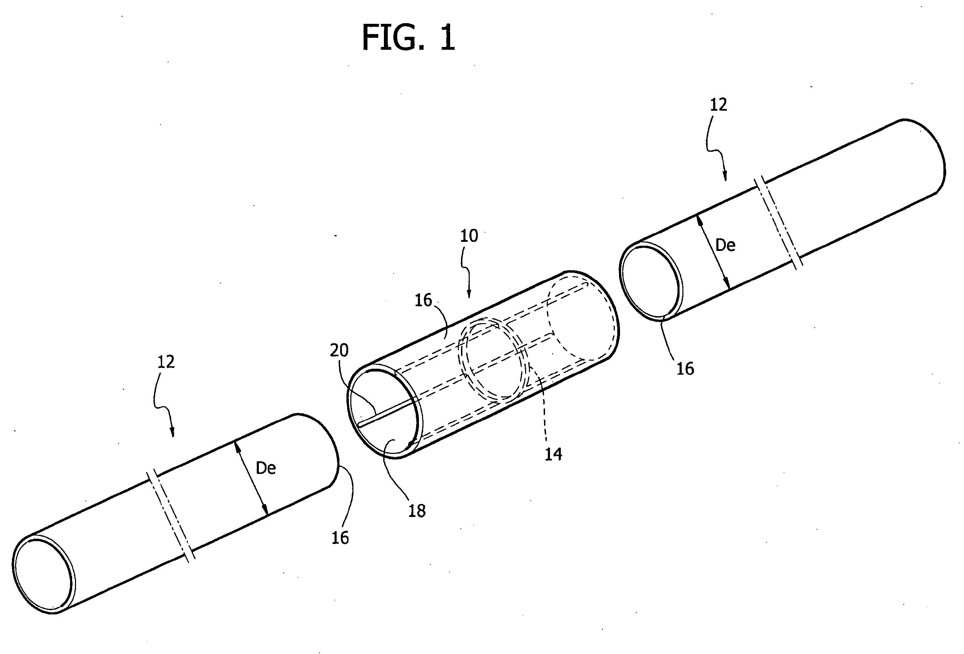

With reference to Figure 1, the number 10 designates a joint according to the present invention, able to connect to each other two smooth conduits 12 for electrical wirings.

The conduits 12 have a smooth cylindrical outer surface with a nominal diameter $D_n$ and a tolerance on the diameter t, so a conduit 12 with a certain nominal diameter will have an actual diameter $D_e$ ranging between a minimum diameter $D_{min}$ and a maximum diameter $D_{max}$:

$$D_{min}=D_n-t=D_e=D_{max}=D_n+t \, .$$

A particularly advantageous characteristic of the joint 10 according to the present invention is that a joint suitable for conduits with a certain nominal diameter $D_n$ establishes a coupling without play and with degree of protection IP40 with any conduit with actual diameter $D_e$ between the aforesaid minimum and maximum values.

The joint 10 according to the present invention is constituted by a body made of an injection moulded plastic material, e.g. PVC or PVC and ABS. The body of the joint 10 has a tubular shape with thin wall. In an embodiment of the invention, the body has in a central position a radial inner shoulder 14 against which bear the front ends 16 of the conduits 12. The inner shoulder 14 has a hole substantially equal to the diameter of the inner hole of the conduits 12.

The joint 10 has an outer surface 16 and an inner surface 18, both with cylindrical shape. The diameter of the inner surface 18 is greater than the maximum actual diameter $D_{max}$ of the conduits 12 that can be coupled with the joint 10.

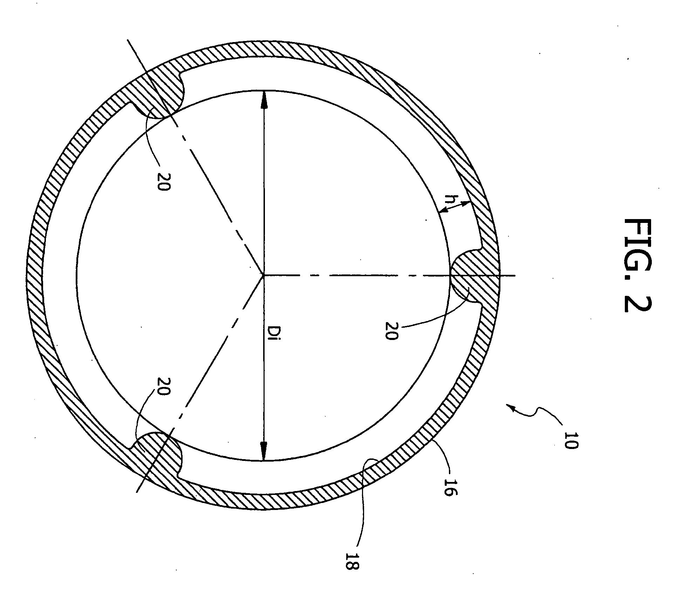

With reference to Figure 2, the joint 10 comprises a plurality of ribs 20 that project in radial direction towards the interior from the inner cylindrical surface 18. Preferably, the ribs 20 are 3, angularly offset from each other by 120°. The ribs 20 extend in longitudinal direction throughout the length of the inner surface 18 and are interrupted solely at the central shoulder 14. Each rib 20 preferably has a semicircle shaped cross section. The height h of the ribs 20 is preferably less than 1 mm.

With reference to Figure 2, in undeformed condition, the ribs 20 are tangential to a circumference having a diameter $D_i$ smaller than the minimum actual diameter $D_{min}$ of the conduits 12: $D_i<D_{min}=D_n-t$.

Therefore, when the actual diameter $D_e$ of the

pipes 12 is equal to the minimum diameter $D_{min}$, the conduit 12 is inserted into the joint 10 with a slight interference.

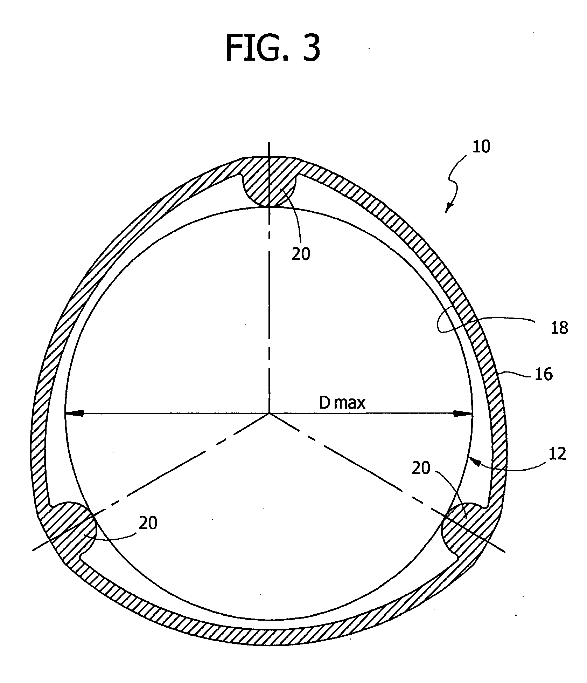

Figure 3 shows the joint 10 according to the present invention coupled to a conduit 12 with actual diameter equal to the maximum diameter: $D_e=D_{max}=D_n+t$. In this condition, the outer wall of the joint 10 is elastically deformed and the joint assumes a three-lobe shape. In these conditions, the conduit 12 is inserted into the joint 10 with rather strong interference. In any case, regardless of the actual diameter of the conduit, the conduit can be inserted into the joint all the way, i.e. until the front end 16 of the conduit comes to abut against the inner shoulder 14. In this way, a continuity is created between the inner surface of the mutually joined conduits, with no steps inside the joint 10.

The interference between the conduit and the joint is always sufficient to obtain a stable connection, with no play, but it is never such as to fix the conduit inside the joint, which would make dismounting difficult.

The number and the shape of the ribs 20 may be varied from what is illustrated herein, provided that the inner ends of the ribs are tangential to a cylindrical surface with a smaller diameter than the minimum diameter of the pipe which can be coupled to the joint 10.

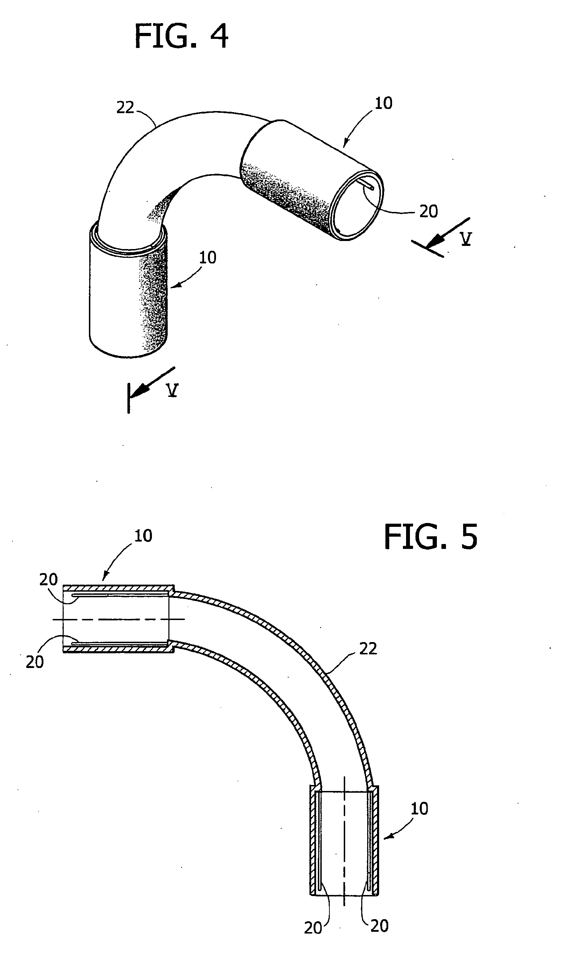

Figures 4 through 9 show the application of the joint according to the present invention to junction devices of various kinds.

In Figures 4 and 5, two joints 10 according to the present invention are connected to each other by a curved rigid conduit 22. Each joint 10 receives the end of a respective conduit 12 as described above. The two joints 10 are permanently fastened to the two ends of the curved conduit 22. The joints 10 and the conduit 22 can be obtained integrally by moulding or co-moulding. Alternatively, the joints 10 can be fastened to the conduit 22 by welding or setting.

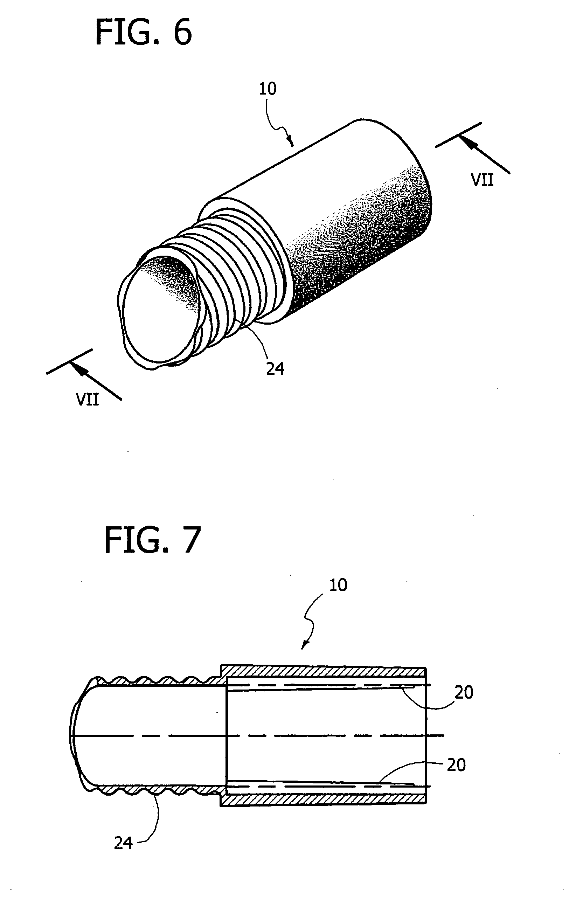

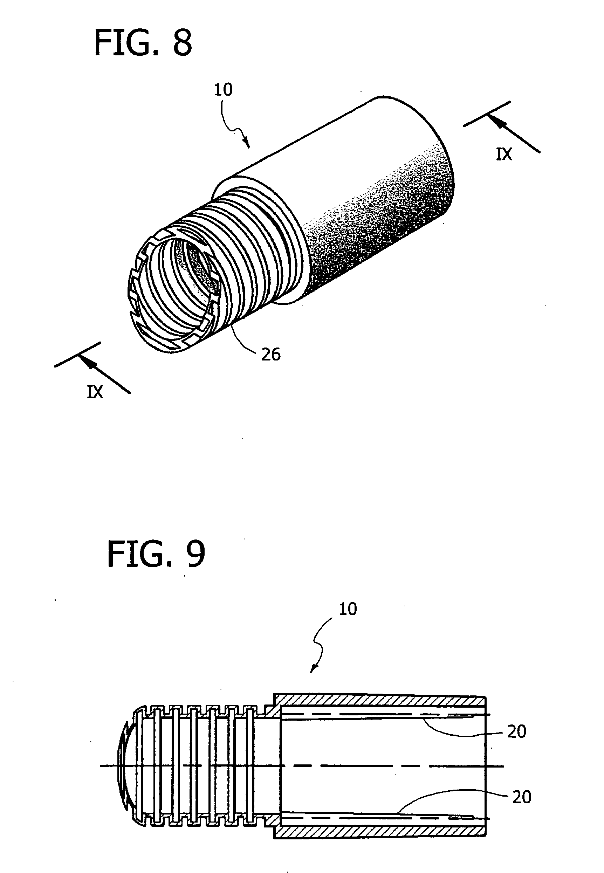

Figures 6 and 7 show the case in which a joint 10 according to the present invention is permanently fastened to a segment of spiral conduit 24. In Figures 8 and 9, the joint 10 is permanently fastened to a corrugated conduit 26. In both cases, the joints can be fastened to the ends of the pipe 24 or 26 by integral moulding, co-moulding, welding or setting. In an additional variant (not shown) the joint 10 could have a threaded end.

**Claims**

1. Junction device for conduits for electric wirings, comprising a tubular body (10) having an inner surface (18) able to receive the end portion of at least one conduit (12), **characterised in that** the tubular body (10) has a plurality of ribs (20) projecting radially towards the interior from the inner surface (18) of the tubular body, the inner ends of the ribs (20) being tangential to a cylindrical surface having a smaller diameter ($D_i$) than the minimum diameter ($D_{min}$) of

the conduit (12) that can be coupled to the body (10).

2. Device as claimed in claim 1, **characterised in that** the inner surface (18) of the tubular body has a cylindrical shape with a diameter greater than the maximum diameter ($D_{max}$) of the conduit (12) that can be coupled with the joint (10).

3. Device as claimed in claim 1, **characterised in that** the ribs (20) have a height (h) no greater than 1 mm.

4. Device as claimed in claim 1, **characterised in that** the ribs (20) have a substantially semicircular shaped cross section.

5. Device as claimed in claim 1, **characterised in that** it comprises in a central position a central shoulder (14) extending towards the interior of the inner surface (18) and having an inner hole whose diameter is substantially equal to the inner diameter of the conduits (12).

6. Device as claimed in claim 1, **characterised in that** it comprises two tubular bodies (10) joined together by a segment of curved rigid conduit (22).

7. Device as claimed in claim 1, **characterised in that** the tubular body is fastened to a spiralled or corrugated conduit segment (24, 26).

EP 1 780 850 A1

FIG. 1

FIG. 2

# FIG. 3

EP 1 780 850 A1

# FIG. 4

# FIG. 5

## FIG. 6

10

VII

VII

24

## FIG. 7

10

20

20

24

# FIG. 8

10

IX

26

IX

# FIG. 9

10

20

20

**European Patent Office**

**EUROPEAN SEARCH REPORT**

Application Number

EP 05 42 5766

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CH 639 741 A5 (GROSSAUER, ALFRED) 30 November 1983 (1983-11-30) * the whole document * | 1-4 | INV. H02G3/06 |
| A | EP 1 465 309 A (INSET S.P.A) 6 October 2004 (2004-10-06) * the whole document * | 1-7 | |

TECHNICAL FIELDS SEARCHED (IPC)

H02G
F16L

The present search report has been drawn up for all claims

| Place of search | Date of completion of the search | Examiner |
|---|---|---|
| Munich | 6 April 2006 | Moueza, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.....................................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 05 42 5766

This annex lists the patent family members relating to the patent documents cited in the above-mentioned European search report.
The members are as contained in the European Patent Office EDP file on
The European Patent Office is in no way liable for these particulars which are merely given for the purpose of information.

06-04-2006

| Patent document cited in search report | | Publication date | Patent family member(s) | Publication date |
|---|---|---|---|---|
| CH 639741 | A5 | 30-11-1983 | NONE | |
| EP 1465309 | A | 06-10-2004 | NONE | |

EPO FORM P0459

For more details about this annex : see Official Journal of the European Patent Office, No. 12/82